# EUROPEAN PATENT APPLICATION

(11) **EP 4 776 351 A1**
(43) Date of publication of application: **15.07.2026**
(21) Application number: 25305020.7
(22) Date of filing: 08.01.2025
(51) Int. Cl.: H01M 4/86, C25B 1/04, C25B 11/031, C25B 13/08, H01M 8/0245, H01M 8/0284

(54) **AN ELECTRODE ASSEMBLY FOR AN ELECTROCHEMICAL CELL, RELATED ELECTROCHEMICAL CELL, ELECTROLYZER AND FUEL CELL**

(71) Applicant: TotalEnergies OneTech, 92400 Courbevoie (FR); Hydrogène du Valais Sàrl, 1868 Collombey (CH); Université Mohammed VI Polytechnique, Ben Guerir, 43150 (MA)
(72) Inventor: AYME-PERROT, David, 92078 PARIS LA DEFENSE CEDEX (FR); GIRAULT, Hubert, CH-1088 ROPRAZ (CH); EL BACHRAOUI, Fatima, 43150 BEN GUERIR (MA)
(74) Representative: Lavoix

(57) **Abstract**

The assembly comprises an elongated porous dry electrode line (20) comprising an elongated core electrode (30) configured to be electrically connected to an electrical power source or to a utility.

The line (20) comprises an outer sheath (32) made at least partially of an ion permeable and gas impervious membrane applied on the electrode (30), the electrode (30) defining inside the outer sheath (32) at least a longitudinal gas circulation canal (34) emerging at one gas collection outlet or gas supply inlet.

The assembly comprises a gas capacity to collect gas from the electrode line (20) or to supply gas to electrode line (20), the gas collection outlet or the gas supply inlet of the electrode line (20) being fluidly connected to the gas capacity.

## Description

The present invention concerns an electrode assembly for an electrochemical cell to produce or consume at least a gas via an electrochemical reaction.

The electrochemical cell is for example a part of an electrolyzer to produce gas via electrolysis using an electrical current supply. The electrochemical cell is in particular configured to produce hydrogen and oxygen through electrolysis of water.

Alternatively, the electrochemical cell is a part of a fuel cell, which can be fed with gases, in particular with hydrogen and oxygen, to produce an electrical current and water.

Electrolysis is a process consisting in passing an electrical current between two electrodes separated by an ion conducting phase. This process is used industrially for the electrolysis of aqueous solutions, for example for the production of chlorine from brine solutions, and for the production of hydrogen from water. The process is also used industrially for the electrolysis of molten salts, for example for the production of aluminum.

The process is also used when the ion-conducting phase is a ceramic, for example a solid oxide ceramic for the electrolysis of water and of carbon dioxide.

Water electrolysis for hydrogen production is a well-established electrochemical process which is used to generate high purity hydrogen from renewable energy sources such as hydroelectricity, solar panels, or wind or tide powered turbines. It can be carried out with either an alkaline or an acid aqueous electrolyte.

The half-reactions for water electrolysis in an alkaline aqueous electrolyte are at the cathode:

2 H₂O + 2 e- -> H₂ + 2 OH⁻

and at the anode:

4 OH- -> O₂ + 2 H₂O + 4e-,

The half-reactions for water electrolysis in an acidic aqueous electrolyte are at the cathode:

2 H⁺ + 2 e- -> H₂

and at the anode:

2 H₂O -> O₂ + 4 H⁺ + 4e-.

In the case of steam electrolysis at high temperatures at the cathode, the half reactions are :

H₂O + 2e⁻ -> H₂ + O²⁻

and at the anode:

2 O²⁻ -> O₂ + 4e-.

Two processes based on aqueous electrolysis at temperatures less than 90°C are mainly used at the industrial scale, namely alkaline electrolysis (ALK) and Proton Exchange Membrane (PEM) electrolysis. The former occurs in alkaline media, whereas the latter occurs in acidic media.

In known installations, the central unit of ALK electrolyzers is a stack, where in most cases, the electrochemical cells are connected in series. The electrochemical cells are composed of electrodes that are separated by a porous membrane. They are electrically connected in series via planar bipolar plates with the following structure:
bipolar plate | electrode + electrolyte solution + H₂ | porous membrane | electrode + electrolyte solution + O₂| bipolar plate.

To reduce the ohmic loss in solution, a metallic mesh electrode is placed directly in contact with the membranes being electronically connected to the adjacent bipolar plate by metallic springs. Such a design is called a zero-gap cell. When efficient sealing of the different components of the stack is obtained, operating at temperature up to 90°C and at pressures up to 30 bars is possible.

A major advantage of the ALK electrolyzers is the use of abundant transition metal catalysts, whereas a major drawback is the use of corrosive concentrated alkaline solutions.

On the contrary, PEM electrolysers comprise a Membrane Electrode Assembly (MEA), with a proton conducting membrane either directly coated on both sides with catalysts (C/Pt cathode - IrO2 anode): CCM (catalyst coated membrane) or placed between two porous electrodes coated with catalytic particles : CCS (catalyst coated substrate).

The PEM electrolyzers are able to operate with pure water arriving at the anode where it is oxidized to oxygen thereby forming protons, which after transfer across the membrane to be reduced into hydrogen. The membrane electrode assemblies are often mounted in series, separated by metallic planar bipolar plates. Often, a gas diffusion layer is placed between the electrodes and the bipolar plates.

A major advantage of PEM electrolyzers is their compactness and the absence of corrosive electrolyte solutions, whereas major drawbacks are the use of precious metal catalytic particles, especially for the oxygen evolution reaction and the use of fluoropolymers for the synthesis of the proton conducting membranes.

More recently, there has been a lot of effort in designing Anion Exchange Membrane (AEM) electrolyzers, combining the advantages of both ALK electrolyzers and PEM electrolyzers.

AEM electrolyzers use a hydroxide anion conducting membrane, and less corrosive low concentration (e.g. 1M) alkaline solutions. The design is similar to that of PEM electrolyzers based on membrane electrode assemblies and bipolar plates.

A major difference with PEM electrolyzers is the nature of the catalytic surfaces based on transition metals rather than precious metals. For example, US 9,340,882 B2 discloses a planar AEM electrolyzer where water is only fed to the anodic compartment, leaving the hydrogen to be collected from the dry cathodic compartment.

Because thermodynamically, water electrolysis is more efficient at high temperatures, a lot of effort has been dedicated to the assembly of ceramic electrochemical cells. US 2022/0190373 discloses an assembly of ceramic stacks for steam electrolysis.

Fuel cells are electrochemical devices producing electricity using an electron donor fuel such as hydrogen and an electron acceptor molecule such as oxygen.

The most widely produced fuel cells are based on hydrogen and oxygen, and the electrochemical device is very similar to a PEM electrolyzer, comprising membrane electrode assemblies, gas diffusion layers and contact electrodes. However, the electrocatalysts particles on the membrane electrode assemblies are different.

The electrode reactions are at the anode:

H₂ -> 2 H⁺ + 2e⁻

and at the cathode:

O₂ + 4 H⁺ + 4e- -> 2 H₂O

In all cases, the electrochemical cells are based on planar accumulation of electrodes separated by membranes. These assemblies are well known. They however remain bulky, difficult to assemble and often require strong sealing between the anodic and cathodic compartments to avoid leakage of current and/or fluids.

Beyond the strong impact of the cost of electricity, the major barrier to the large-scale development of water electrolysis is the large investment required for the production of hydrogen at the gigawatt scale.

One aim of the invention is to provide cheap and compact electrode assemblies to be included in various types of electrochemical cells of electrolyzers or/and fuel cells operating in particular but not necessarily at high power, the electrode assemblies being simple to manufacture and reliable to operate.

To this aim, the subject matter of the invention is an electrode assembly of the above-mentioned type, characterized by:
- at least one elongated porous dry electrode line comprising at least one elongated core electrode being electrically conductive, the at least one elongated core electrode being configured to be electrically connected to an electrical power source providing an electrical current or to a utility consuming an electrical current, the at least one elongated porous dry electrode line comprising an outer sheath made at least partially of an ion permeable and gas impervious membrane applied on the at least one elongated core electrode, the at least one elongated core electrode defining inside the outer sheath at least a longitudinal gas circulation canal emerging at least at one gas collection outlet or gas supply inlet of the at least one elongated porous dry electrode line;
- a gas collecting or supplying capacity to collect gas from the at least one elongated porous dry electrode line or to supply gas to the at least one elongated porous dry electrode line, the gas collection outlet or the gas supply inlet of the at least one elongated porous dry electrode line being fluidly connected to the gas capacity.

The electrode assembly according to the invention may comprise one or more of the following feature(s), taken solely or according to any technical feasible combination:
- The at least at one gas collection outlet or gas supply inlet of the at least one elongated porous dry electrode line is located at a gas collection or supply end of the at least one elongated porous dry electrode line;
- The at least one elongated core electrode line is configured to be electrically connected to an electrical power source providing an electrical current or to a utility consuming an electrical current at one connection end of the at least one elongated porous dry electrode line;
- The at least one elongated porous dry electrode line is a cable or a porous wire
- The at least one elongated porous dry electrode line comprises several elongated core electrodes being preferentially in contact with the outer sheath and being configured to be electrically connected to the electrical power source providing an electrical current or to the utility consuming an electrical current.
- The several elongated core electrodes are coated with an ionomer layer, in contact with the outer sheath.
- The at least one elongated porous dry electrode line comprises at least an inner core positioned within the several elongated core electrodes, the inner core being in particular porous, and advantageously made of electrically insulating material.
- The ion permeable membrane is an ion solvating polymer or an ion exchange polymer.
- The ion permeable membrane is an extruded, dip-coated, electrophoretic and electrochemical deposited, potentially cured, in particular photo-cured or thermally-cured membrane.
- It comprises a plurality of elongated porous dry electrode lines, each elongated porous dry electrode line of the plurality of elongated porous dry electrode lines being connected to the same gas capacity through the fluid connection of the at least one canal of each elongated porous dry electrode line of the plurality of elongated porous dry electrode lines in parallel, to the capacity.
- It comprises at least one elongated counter electrode line, configured to be electrically connected to the electrical power source providing an electrical current or to the utility consuming an electrical current, the at least one elongated counter electrode line having at least a contact point, in particular a contact line or surface, with the at least one electrode conductive line, in particular with the outer sheath of the at least one electrode conductive line.
- The at least one elongated counter electrode line is made of at least one bare electrical core counter electrode.
- The at least one elongated counter electrode line is an elongated porous dry counter electrode line comprising at least one elongated core counter electrode, the at least one elongated porous dry counter electrode line comprising an additional outer sheath made at least partially of an ion permeable membrane applied on the at least one elongated core counter electrode, the additional outer sheath and the at least one elongated core counter electrode defining inside the additional outer sheath at least an additional longitudinal gas circulation canal emerging at least at one gas collection outlet or gas supply inlet of the at least one elongated porous dry counter electrode line.
- The at least an elongated counter electrode line has a plurality of contact points with one elongated porous dry electrode line or with a plurality of elongated porous dry electrode lines along the length of the at least an elongated counter electrode line.
- The one elongated porous dry electrode line is twisted with the at least one elongated counter electrode line forming a bundle defining a plurality of contact points, preferentially a contact line or a contact surface.
- It comprises a plurality of bundles, each comprising at least one elongated porous dry electrode line and at least one elongated counter electrode line twisted together, the bundles being assembled in parallel to the gas capacity, forming a brush.
- It comprises a plurality of elongated porous dry electrode lines, the plurality of elongated porous dry electrode lines being interlaced, in particular weaved, braided or knitted, with a plurality or elongated counter electrode lines to form at least a rug or a multilayer three-dimensional structure having several layers of elongated porous dry electrode lines.
- each elongated porous dry electrode line of the rug or the multilayer three-dimensional structure has a plurality of successive contact points, in particular a contact line or a contact surface, with several successive elongated counter electrode lines of the rug or of the multilayer three-dimensional structure, each elongated counter electrode lines of the rug or of the multilayer three-dimensional structure having a plurality of successive contact points, in particular a contact line or a contact surface, with several successive elongated porous dry electrode lines of the rug or the multilayer three-dimensional structure.
- The at least one elongated porous dry electrode line is one of a cathode or of an anode, the at least one elongated counter electrode line being another one of a cathode or of an anode.

The invention also concerns an electrochemical cell comprising at least one electrode assembly as defined above, and at least a container, containing an electrolyte solution in which the at least one elongated porous dry electrode line is immersed.

The invention also concerns an electrolyzer comprising at least one electrochemical cell as defined above and at least an electrical power source connected to the at least one electrochemical cell to provide an electrical current to the at least one elongated porous dry electrode line of the at least one electrode assembly, and at least a gas processing installation, fluidly connected to the or each gas capacity to process gas produced in the at least one elongated porous dry electrode line and transported to the gas capacity via the longitudinal gas circulation canal of the at least one elongated porous dry electrode line.

The invention also concerns a fuel cell comprising at least one electrochemical cell as defined above and at least a gas source, connected to the at least one elongated porous dry electrode line, to supply gas to the longitudinal gas circulation canal of the at least one elongated porous dry electrode line.

The invention will be better understood, based on the following description, given solely as an example, and made in reference to the appended drawings, in which:
- Figure 1 is a schematic view of a first electrochemical cell comprising a first electrode assembly according to the invention having an elongated porous dry electrode line twisted with an elongated counter electrode line;
- Figure 2 is a schematic perspective view of several variants of elongated porous dry electrode lines which can be used in electrode assemblies according to the invention;
- Figure 3 is a schematic view of the electrochemical reactions which occur at the contact points or lines or surfaces between the elongated porous dry electrode line and the elongated counter electrode line in the bundle of figure 1;
- Figure 4 is a variant of the electrochemical cell of figure 1, comprising a variant electrode assembly according to the invention having several bundles of an elongated porous dry electrode line twisted with an elongated counter electrode line ;
- Figure 5 is a view of an electrochemical cell comprising a second electrode assembly according to the invention, made of a woven, braided or knitted rug of elongated porous dry electrode lines and elongated counter electrode lines;
- Figure 6 is a schematic enlarged partial view of the rug of figure 5;
- Figure 7 is a schematic view of the electrochemical reactions occurring at the contact points or lines or surfaces between the elongated porous dry electrode lines and the elongated counter electrode lines in the rug of figure 6;
- Figure 8 is a variant of electrochemical cell comprising several rugs mounted in series in several electrolyte reservoirs ;
- Figure 9 is a view of a three-dimensional electrode assembly comprising several layers of elongated porous electrode lines weaved with several elongated counter electrode lines ;
- Figure 10 is a schematic view of a fuel cell comprising another electrode assembly according to the invention.

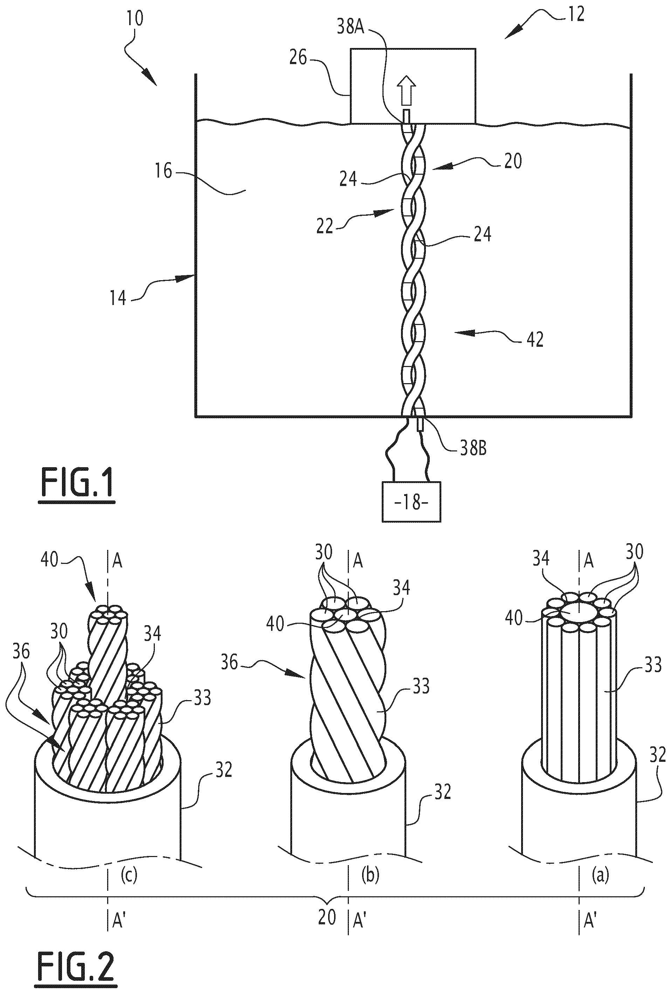

A first example of an electrochemical cell 10 comprising an electrode assembly 12 according to the invention is shown in figure 1.

The electrochemical cell 10 of figure 1 is here part of an electrolyzer, in particular to electrolyze a liquid electrolyte, for example water, in particular through alkaline water electrolysis.

The electrochemical cell 10 comprises an electrode assembly 12, a container 14, containing an electrolyte 16, and an electrical power source 18 electrically connected to the electrode assembly 12 to supply an electric current to the electrode assembly 12.

As shown in figures 1 to 3, the electrode assembly 12 comprises at least an elongated porous dry electrode line 20 and at least one elongated counter electrode line 22 in contact with the elongated porous dry electrode line 20 at a plurality of contact points 24, in particular along a contact line. The contact points 24 can be discrete or can define a contact line or a contact surface.

The electrode assembly 12 further comprises a gas collecting capacity 26, to collect gas produced during the electrolysis, particularly at the contact points 24 between the elongated porous dry electrode line 20 and the elongated counter electrode line 22.

In figures 2(a) to (c), several examples of elongated porous dry electrode lines 20 are shown.

In the example of figure 2(a) to (c), each elongated porous dry electrode line 20 comprises at least a core elongated electrode 30, here preferentially a plurality of core elongated electrodes 30, and an outer sheath 32 made at least partially of an ion permeable membrane applied on the core elongated electrode 30.

Each elongated porous dry electrode line 20 thus forms an ion permeable membrane coated and electron conducting gas permeable cable, or an ion permeable membrane coated and electron conducting gas permeable porous wire.

The outer sheath 32 and the at least one core elongated electrode 30 define in the inner volume within the outer sheath 32, at least one longitudinal canal 34 for collecting gas produced via electrolysis at the contact points 24 and convey the gas along the elongated porous dry electrode line 20 within the outer sheath 32.

The elongated porous dry electrode line 20 generally has a dimension along its longitudinal axis A-A', which is greater than its transverse dimension along an axis perpendicular to the longitudinal axis A-A'.

In particular, the ratio of the length of the elongated porous dry electrode line 20 to its maximum transverse dimension is advantageously greater than 5, in particular greater than 10, in particular greater than 100.

The elongated porous dry electrode line 20 is generally flexible and has a minimum bending radius which is at least 10 times its diameter.

The minimum bending radius of the elongated porous dry electrode line 20 is defined as the smallest radius at which the line can be bent without causing damage or compromising its performance. This radius is measured generally at the inside of the bend.

The at least one core elongated electrode 30 is for example made of a metal, in particular steel, or nickel, or of conductive fibers such as carbon fibers, which can be bundled.

The at least one core elongated electrode 30 can be coated or plated with at least a metal, notably a transition metal, in particular iron, cobalt, nickel, copper, manganese, chromium, titanium, zinc, vanadium, cadmium, and preferably nickel, in particular to form nickel plated steel electrode or eventually a precious metal such as platinum depending on the pH of the electrolyte solution.

The coating is for example made of catalytic nano/microparticles, in particular smaller than 100 µm. Catalytic nanoparticles are generally in the range of 1 to 200 nanometers, and act as catalysts to speed up chemical reactions.

In a variant, the core elongated electrodes 30 coated or plated with metal are further coated with a layer 33 of ionomers, either cation exchange ionomers or anionic exchange ionomers. The ionomer layer 33 can be a gel layer to guarantee a good ionic contact between the core elongated electrode 30 and the ion permeable membrane 32.

The diameter of the or each core elongated electrode 30 ranges from 1 µm, (for example for carbon fibers) to 2 cm (for example in large scale electrochemical cells), in particular from 50 µm to 2000 µm for fibers and for 0,5 mm to 1 cm for wires.

The at least one core elongated electrode 30 is thus electrically conductive. It for example has a conductivity greater than 10⁵ S/m, in particular measured with the ASTM E1004-17 standard.

In the example of figure 2(a), the elongated porous dry electrode line 20 comprises several parallel core elongated electrodes 30 positioned in contact with the inner surface of the outer sheath 32 and advantageously distributed around the longitudinal axis A-A'.

The elongated porous dry electrode line 20 further comprises at least one central or peripheral inner core 40, here extending parallel to the several parallel core elongated electrodes 30 and positioned among the several parallel core elongated electrodes 30.

The at least one central or peripheral inner core 40 is for example made of porous metal or polymer, without being coated with at least a transition metal. The polymer of the strand 40 is for example made of a bundle of porous natural polymer fibers, to facilitate gas transport or to promote the adhesion of the ionomer gel layer 33.

Each central core 40 generally has a diameter greater than the diameter of each core elongated electrode 30 to create larger interstices for gas circulation between the inner cores 40, or/and with the peripheral core elongated electrodes 30.

A peripheral polymer core 40 can also be used to confer hydrophobicity to the core elongated electrode 30 to avoid flooding by excess water permeating through the outer sheath 32, such that the inner volume of the strand 36 remains dry when the outer sheath 32 is immersed in the electrolyte 16.

The inner core 40 is advantageously made of electrically insulating material. It for example has a conductivity smaller than 10⁻¹⁵ S/m, in particular measured with the ASTM E1004-17 standard.

The at least one core elongated electrode 30 and possibly, the at least one inner core 40, extends to the ends 38A, 38B of the elongated porous dry electrode line 20. The at least one core elongated electrode 30 is electrically connected to a terminal of the electrical power source 18 at a connection end 38B of the elongated porous dry electrode line 20.

In the example of figure 2(b), the plurality of core elongated electrodes 30 are twisted together around the inner core 40 to form a strand 36, which is surrounded by the outer sheath 32.

The strand 36 extends to the ends 38A, 38B of the elongated porous dry electrode line 20, and is electrically connected to a terminal of the electrical power source 18 at a connection end 38B of the elongated porous dry electrode line 20.

In the example of figure 2(c), a plurality of peripheral strands 36 of twisted core elongated electrodes 30 are placed in contact with the inner surface outer sheath 32. A central member 40A is for example made of a reinforcing inner core 40 or of a strand of reinforcing inner cores 40, for example made of polymer or/and metal.

The outer sheath 32 is for example made of an ion permeable membrane, in particular an ion solvating polymer or an ion exchange polymer.

The elongated porous dry electrode line 20 forms an ion and solvent permeable, but gas impervious membrane coated and electron conducting gas permeable cable or an ion and solvent permeable but gas impervious permeable membrane coated and electron conducting gas permeable porous wire.

The outer sheath 32 is impervious to gases, in particular to those generated on the at least one core elongated electrode 30 and on or in the at least one elongated counter electrode line 22.

In particular, the permeability of the outer sheath 32 with regards to the generated gases, in particular hydrogen and oxygen, as measured according to ASTM D1434 Method M is generally smaller than smaller than 200 barrers for hydrogen and smaller than 5 barrers for oxygen. One barrer is equal to 10⁻¹⁰ cm³ (STP) ·cm/(cm²·s·cmHg), where cm³ (STP) is a standard cubic centimeter representing the number of gas molecules or moles that would occupy one cubic centimeter at standard temperature and pressure, as calculated via the ideal gas law.

Examples of ion permeable membranes are made of ionic groups grafted onto a polymer backbone.

When alkaline electrolysis of water is carried out, the outer sheath 32 is for example made of an anion solvating membrane or anion exchange membrane. This membrane allows the transport of hydroxide anions from the electrode to the electrolyte at each contact point 24.

The anion solvating membrane is for example formed of polybenzimidazole (PBI). The anion exchange membrane is for example formed of ammonium or piperidinium groups grafted on an inert polymer backbone.

The membrane is for example deposited on the at least one core elongated electrode 30, to be directly in contact with the at least one core elongated electrode 30, for example by extrusion, deep coating, electrophoretic and electrochemical deposition. If needed, the membrane can be further cured, for example by photo-curing or thermal-curing.

The thickness of the outer sheath 32 is for example greater than 40 microns and is generally comprised between 50 microns and 1 millimeter.

The gas conveying canal 34 is delimited inside the outer sheath 32 in the interstices defined between the core elongated electrode(s) 30 and the outer sheath 32, between the core elongated electrodes 30 and/or between the inner core(s) 40. It extends along the whole length of each elongated porous dry electrode line 20.

The gas conveying canal 34 emerges at least at one end 38A which is a gas collecting outlet fluidly connected or emerging directly into the gas collecting capacity 26.

Thus, the gas produced by electrolysis at various contact points 24 (e.g. discrete or forming lines or surfaces) along the elongated porous dry electrode line 20 is conveyed along the gas conveying canal 34 to be collected at the gas collection end 38A and fed to the gas collecting capacity 26.

In the example of alkaline electrolysis of water, the core elongated electrodes 30 are cathodes where hydrogen 46 is produced and collected in the gas conveying canal 34 to be conveyed to a gas collecting capacity 26 configured to receive hydrogen.

In the example of figure 2 to 4, the elongated counter electrode line 22 is made of a bare metal line, in particular a transition metal line, or of a metal or polymer line coated or plated with transition metal.

The metal used to form the elongated counter electrode line 22 is for example nickel in case of alkaline electrolysis or titanium in case of PEM electrolysis

In this example, the elongated counter electrode line 22 has a length for example comprised between 80% and 500% of the length of the elongated porous dry electrode line 20, in particular depending on the twisting procedure, which may include coiling the elongated counter electrode line 22 around the elongated porous dry electrode line 20.

The minimum bending radius of the elongated counter electrode line 22 advantageously corresponds to the outer radius of the elongated dry porous electrode line 20.

The minimum bending radius of the elongated counter electrode line 22 is defined as the smallest radius at which the line can be bent without causing damage or compromising its performance. Its radius is measured generally at the inside of the bend.

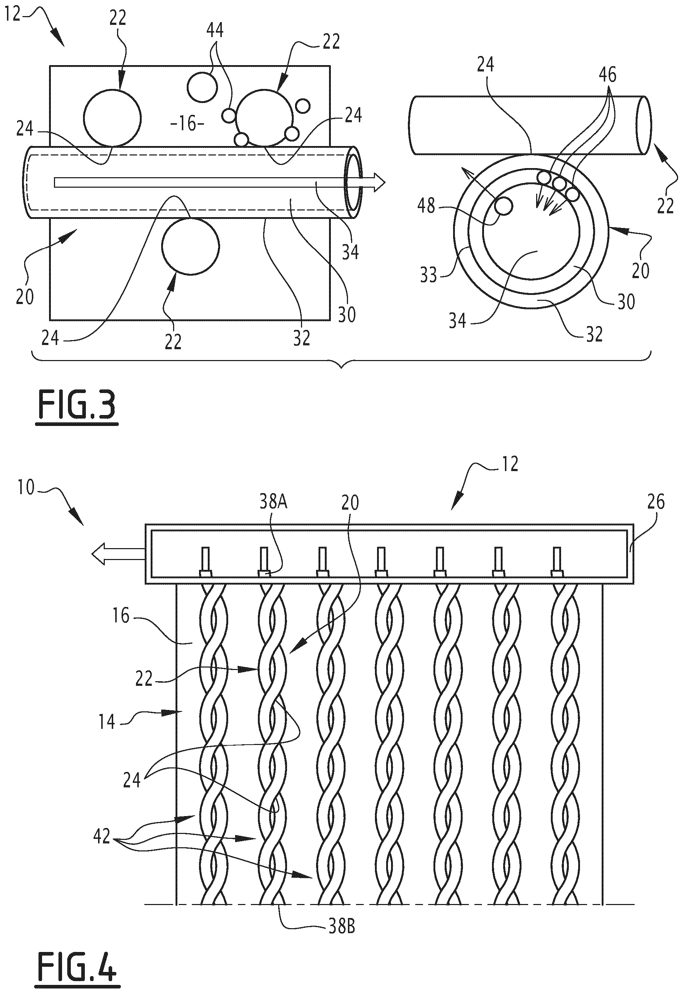

In the example of alkaline electrolysis of water, the elongated counter electrode line 22 is an anode and oxygen 44 is produced at the anode and forms bubbles in the electrolyte 16, as shown in figure 3.

In a variant (not shown), gas produced at the elongated counter electrode line 22 is collected and transported. The elongated counter electrode line 22 then has a structure similar to the elongated porous dry electrode lines 20, i.e. comprising at least one core elongated counter electrode surrounded by an ion exchange membrane at its periphery forming an outer sheath.

The elongated counter electrode line 22 then forms an ion permeable membrane coated and electron conducting gas permeable cable, or an ion permeable membrane coated and electron conducting gas permeable wire.

In the example of figure 1, the elongated porous dry electrode line 20 and the elongated counter electrode line 22 are twisted to form a twisted bundle 42.

The lines 20, 22 are twisted together such that they have several contact points 24 along their length, in particular a contact line.

The length of the contact line is for example given as L = √ [(2·π·r)² +(p·n)²), n being the number of pitches, p being the pitch, i.e. the distance between two twists, and r the radius of the lines 20, 22, in the occurrence in which the lines 20, 22 have equal radii.

At each contact point 24, the distance between the core elongated electrode 30 and the opposed counter electrode formed by the elongated counter electrode line 22 is equal to the thickness of the outer sheath 32, forming a zero-gap electrochemical cell at the contact point 24 when immersed in the electrolyte 16.

The twisted bundle 42 is connected to the gas collecting capacity 26 to recover a gas formed via electrolysis at each contact point 24 and transported through the canals 34.

In this example, the gas collecting capacity 26 is a tank having an inner volume greater than the volume of the canal 34 inside the elongated porous dry electrode line 20.

The gas collecting capacity 26 is advantageously connected to a processing installation configured to transport, separate, treat, or/and store the produced gas.

The electrical power source 18 is connected at one terminal to the at least one core elongated electrode 30 at the connection end 38B of the elongated porous dry electrode line 20 and at another terminal to the elongated counter electrode line 22. It is thus configured to supply a current at the cathode and recover a current at the anode.

The container 14 is here a tank containing the electrolyte 16. In the particular case of the alkaline electrolyte of water, the electrolyte is for example a potassium hydroxide solution with a concentration greater than 0.1 mol per liter of electrolyte; or an alkali-hydroxide solution (NaOH, LiOH, CsOH) with a concentration greater than 0.1 mol per liter of electrolyte; or the mixture of a solution of alkali hydroxide with a concentration greater than 0.1 mol per liter and an additive such as vanadium oxide (V2O5) with a concentration greater than 1 g per liter.

Gas production via electrolysis carried out at an electrode assembly 12 according to the invention will be now described, in reference in particular to figure 3. The electrode assembly 12 is immersed in a container 14 containing electrolyte 16, as shown in figure 1.

The electrical power source 18 is activated to provide current to the elongated porous dry electrode line 20.

In the case of alkaline electrolysis of water, hydrogen 46 is produced on the core elongated electrodes 30 at the interface in contact with the ionomers of layer 33 and the outer sheath 32, at the contact points 24, as shown in figure 3.

The produced gas, in particular hydrogen 46, is then collected in the canal 34 and is transported to the collection outlet 38A and to the gas collecting capacity 36.

In the case of alkaline electrolysis of water, hydroxide anion 48 produced at the core elongated electrodes 30 pass through the outer sheath 32 here made of an anion exchange membrane.

Gas, in particular oxygen 44, is thus produced along with water in the electrolyte 16 at the contact points 24. The oxygen 44 bubbles in the electrolyte 16 and is evacuated out of the container 14.

Electrode assemblies 12 comprising elongated porous dry electrode lines 20 are thus easy to manufacture. They allow the transport and collection of gases produced via electrolysis in a tight and safe manner up to a gas collecting capacity 26. Such an electrode assembly 12 is particularly useful in the alkaline electrolysis of water in which hydrogen is produced at the cathodes within the elongated porous dry electrode lines 20.

Each elongated porous dry electrode line 20 is easily put in contact with an elongated counter electrode line 22, to create many contact points 24 and hence, a significant surface for electrolysis with zero-gap, hence reducing leaking currents.

As such, the design of the electrode assemblies 12 can be reproduced and deployed in large scale at optimized costs.

In the example shown in figure 4, each gas collector collecting capacity 26 is connected to a plurality of twisted bundles 42 to form a brush which can be immersed in electrolyte 16 and connected to at least an electrical power source 18 to carry out the electrolysis at an industrial scale.

Advantageously, the twisted bundle 42 or the brush of twisted bundles 42 is connected to a vibrating stage to facilitate gas evolution in the electrolyte 16. In a variant, the twisted bundle 42 or the brush of twisted bundles 42 is connected to a rotating shaft to make it rotate about a rotation axis to expel gas formed in the electrolyte 16 by centrifugation.

In a variant (not shown), the electrode assembly 12 only comprises at least one elongated porous dry electrode line 20 and a gas collecting capacity 16 without comprising one or more elongated counter electrode line(s) 22. A counter electrode is then plunged in the electrolyte 16 at a distance from the or from each elongated porous dry electrode line 20.

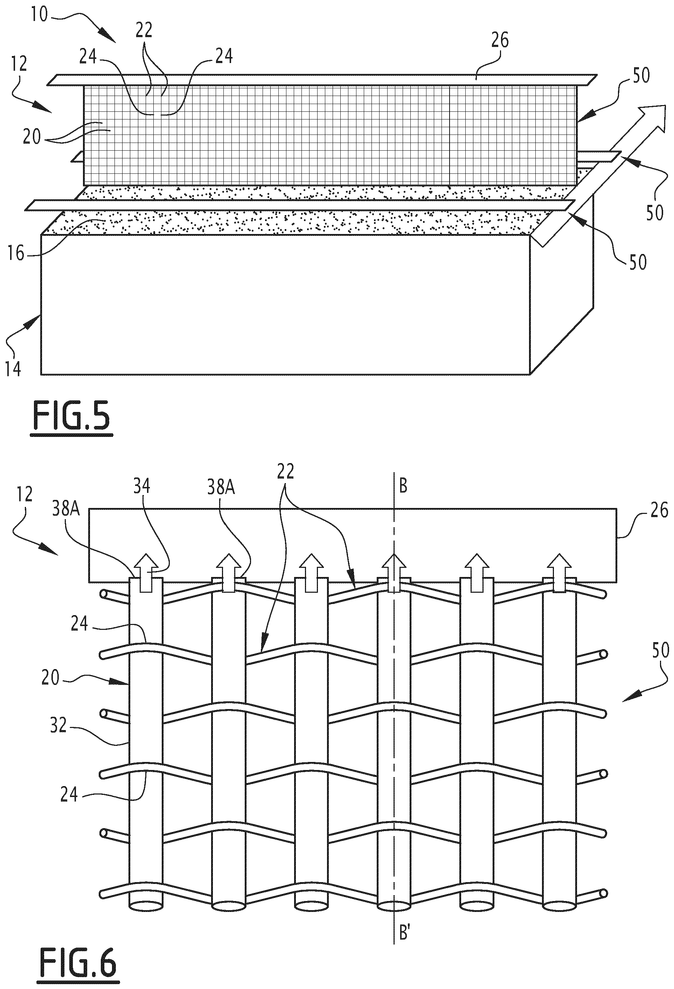

Another electrochemical cell 10 according to the invention is shown in figures 5 to 7. The electrochemical cell 10 comprises a weaving comprising a series of parallel elongated porous dry electrode lines 20 forming warps of the weaving, which are weaved with a plurality of elongated counter electrode lines 22 forming wefts.

In this example, the elongated porous dry electrode lines 20 are all connected to the same gas collecting capacity 26. They extend parallel to a warp axis B-B' which is vertical in figure 6.

The elongated counter electrode lines 22 extend transversely to the elongated porous dry electrode lines 20.

Each counter electrode line 22 successively passes over and under successive adjacent elongated porous dry electrode lines 20 to form the weaving.

As shown in figure 5, the electrode assembly 12 thus forms a rug 50 (or a curtain) which is substantially planar.

Each elongated porous dry electrode line 20 comprises a plurality of contact points 24 with successive weaved elongated counter electrode lines 22. Similarly, each elongated counter electrode line 22 comprises a plurality of contact points 24 with successive adjacent elongated porous dry electrode lines 20.

In the example of figure 5, the rug 50 is suspended below the gas collecting capacity 26 to be placed in the container 14 containing electrolyte 16. Successive rugs 50 are placed parallel to one another in the container 14. Each rug 50 can thus be replaced without replacing the other rugs 50 in case of malfunction.

The spacing between the warps and the wefts is preferentially adjusted to optimize gas bubble evolution in the electrolyte 16.

The elongated counter electrode lines 22 are preferably flexible, with a minimum bending radius equal to the outer radius of the elongated porous dry electrode line 20 to allow a greater contact surface between the outer surface of the outer sheath 32 of the elongated porous dry electrode line 20 and the elongated counter electrode line 22 at the contact points 24.

For example, the elongated counter electrode lines 22 are made of a ribbon of several flexible bare wires or fibers, in particular carbon fibers.

In the example of figures 5 and 6, the elongated porous dry electrode lines 20 define the rug 50 length. The latter length is usually greater than 1 m, in particular comprised between 1 m and 20 m.

The elongated counter electrode lines 22 define the rug 50 width. The rug 50 width is generally delimited by the size of the weaving machine in which the rug 50 is manufactured. The rug width is for example greater than 50 cm and generally comprised between 1 m and 10 m.

In a variant, the elongated porous dry electrode line 20 has two parallel segments connected by a U-turn at an end 38B opposed to the gas collection ends 38A in the gas collecting capacity 26.

Advantageously, the outer sheath 32 at one or more gas collection ends 38A is removed chemically or physically in the gas collecting capacity 16 to expose the core elongated electrode 30 ends and the outlet of the canal 34. This allows the produced gas transported in the canal 34 to be collected in the gas collecting capacity 16.

The operation of electrochemical cell 10 of figures 5 to 7 is analogous to the operation of the previous electrochemical cell 10 represented in figures 1 to 4.

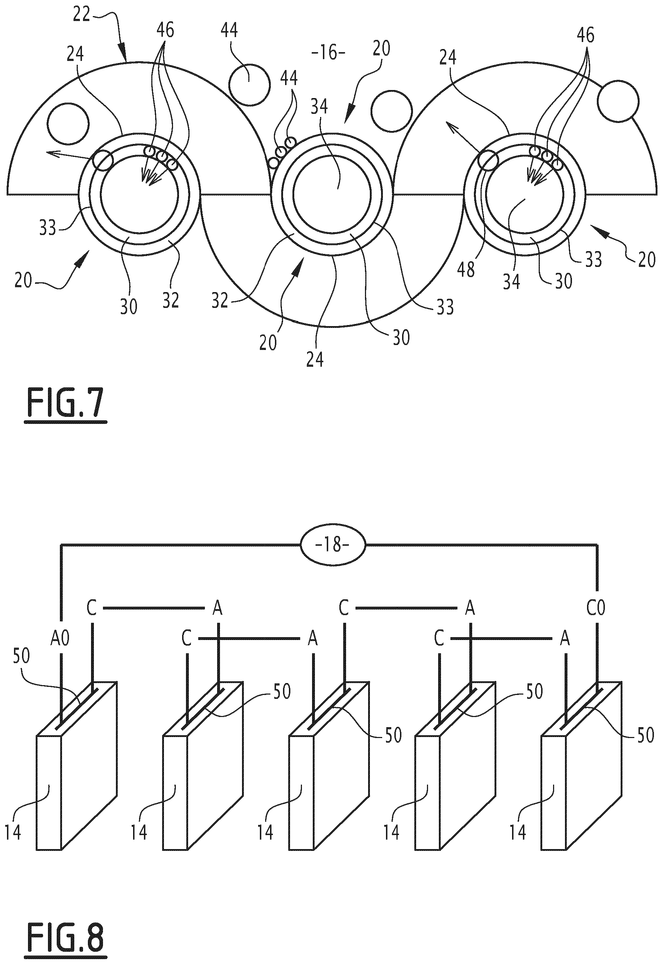

As shown in figure 7, in the example of alkaline electrolysis of water, a current from the electrical power source 18 is supplied to each core elongated electrode 30 of the successive elongated porous dry electrode lines 20.

At each contact point 24, an electrolysis reaction occurs to produce gas. In the alkaline electrolysis of water, hydrogen 46 is produced within the outer sheath 32, at the interface between the outer sheath 32 and at least one core elongated electrode 30.

The produced gas, in particular hydrogen 46, is collected in the longitudinal canal 34 of each elongated porous dry electrode line 20 and is transported to the gas collecting capacity 26 to be recovered, separated and/or processed.

In the example of alkaline electrolysis of water, the hydroxide ions produced at the outer sheath 32 of each elongated dry electrode line 20, are transported through the ion exchange membrane and react at the outer surface of the outer sheath 32 in contact with the elongated counter electrode line 22 to form oxygen 44.

In another variant shown in figure 8, each rug 50 is placed in its own container 14 containing electrolyte 16. The containers 14 are not connected with one another. No electrolyte 16 circulation occurs. The containers 14 are regularly fed with water. As such, no leakage currents are created between the electrode rugs 50.

The rugs 50 are connected in series, with each cathode C of a given rug 50 contained in a given container 14 being connected to an anode A of an adjacent rug 50 in an adjacent container 14.

The cathode C0 and the anode A0 at the end of the series of connected rugs 50 are connected to respective terminals of the electrical power source 18.

Thanks to this architecture, each rug 50 forms a single electrochemical cell which operates at its optimum voltage.

In a variant (not shown), the elongated counter electrode lines 22 have a structure similar to the elongated porous dry electrode lines 20, i.e. comprising at least one core elongated counter electrode surrounded by an ion exchange membrane at its periphery forming an outer sheath. The elongated counter electrode lines 22 forms an ion permeable membrane coated and electron conducting gas permeable cable or an ion permeable membrane coated and electron conducting gas permeable porous wire.

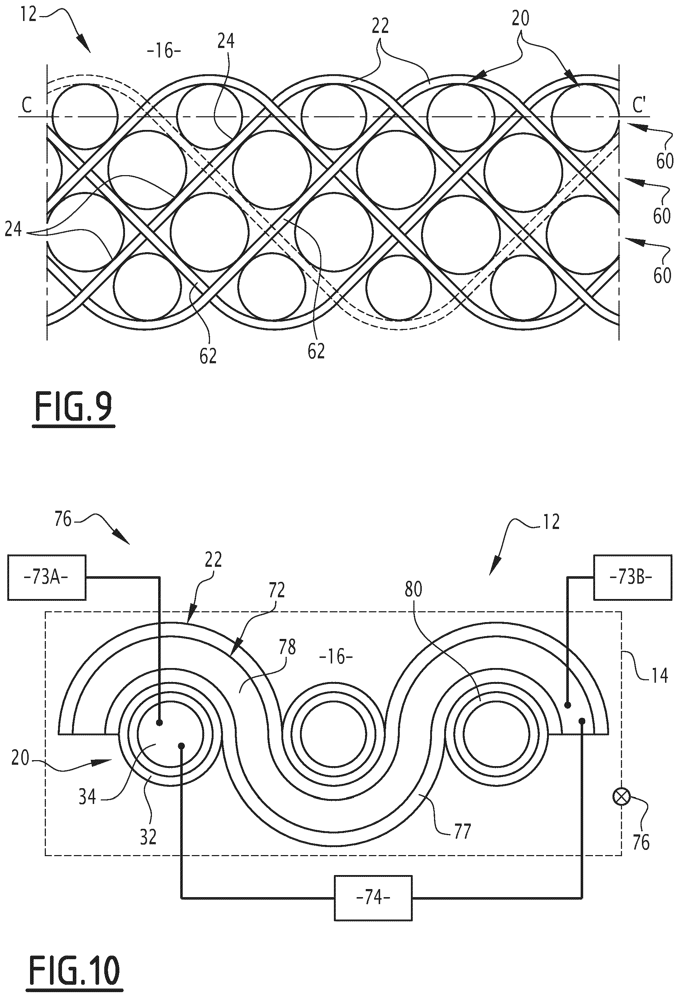

In the example of figure 9, the electrode assembly 12 is made of a multilayer three-dimensional weaving pattern.

In this example, successive layers 60 of parallel elongated porous dry electrode lines 20 are formed and are placed adjacent to one another. Each given layer 60 is staggered with an adjacent layer 60 such that the elongated porous dry electrode lines 20 of a given layer 60 are located between the elongated porous dry electrode lines 20 of the adjacent layers 60, in projection in a plane perpendicular to the longitudinal axis A-A' of the elongated porous dry electrode lines 20.

The parallel elongated porous dry electrode lines 20 in the successive adjacent layers 60 forming warps are weaved with elongated counter electrode lines 22 forming wefts traversing the successive layers 60 creating contact points 24 aligned along successive back and forth segments 62 inclined relative to the layer axis C-C' defined by a projection of the elongated porous dry electrode lines 20 of a layer 60 in a plane perpendicular to the longitudinal axis A-A' of each elongated porous dry electrode line 20 in the layer 60.

In a variant, not shown, the elongated porous dry electrode lines 20 are braided or knitted with the plurality of counter electrode lines 22.

Figure 10 illustrates another electrochemical cell 10 forming part of a fuel cell 70.

In this example, the fuel cell 70 comprises an electrode system 12 having a plurality of elongated porous dry electrode lines 20 and a plurality of porous dry counter electrode lines 22, which are twisted, weaved, knitted or braided with the elongated porous dry electrode lines 20. The electrode system 12 advantageously forms a brush of twisted bundles 42, a rug 50 or and a three-dimensional assembly of layers 60 as described above.

The core elongated electrodes 30 of the elongated porous dry electrode line 20 and the core elongated counter electrodes 72 of the porous dry counter electrode lines 22 are made for example of an assembly of conductive fibers such as carbon fibers surrounded by a respective outer sheath 32, 77 made of an ion exchange membrane.

They define gas transportation canals 34, 78 in the respective outer sheath 32, 77.

The gas transportation canals 34, 78 of the elongated porous dry electrode lines 20 and of the dry counter electrode lines 72 are each connected to a respective gas source, for example a hydrogen source 73A and an oxygen source 73B, respectively.

In this example, the elongated porous dry electrode lines 20 are connected to a hydrogen source 73A and the elongated porous dry counter electrode lines 22 are connected to an oxygen source 73B.

The core elongated electrodes 30 and the corresponding core elongated counter electrodes 72 are respectively connected to respective terminals of a utility 74 to be powered by a current generated in the fuel cell 70.

The elongated porous dry electrode lines 20 and the elongated porous dry counter electrode lines 22 are received in a container 14, for example a pouch, containing an electrolyte 16. The container 14 is provided with an excess liquid removal outlet 76.

The electrolyte 16 is for example pure water for PEM fuel cell.

In a preferred embodiment, the container 14 is a flexible pouch which contains a rug 50 as described above.

In the example of figure 10, the fuel cell 70 is a proton carrier-based fuel cell.

The catalysts applied on the core elongated electrodes 30 (for example made of carbon fibers) are chosen to promote hydrogen oxidation to protons. The catalysts are for example chosen among platinum group metals (PGMs), or metal sulfides or carbides. An ionomer layer 80 formed of cation exchange oligomers is positioned between the core elongated electrodes 30 and the outer sheath 32

The outer sheath 32 is made of a cation exchange membrane to let protons produced at the core elongated electrodes 30 pass from its inner surface to its outer surface. The cation exchange membrane is for example made of polyfluorosulfonic acid polymers or other proton conducting polymers.

The catalysts applied on the core elongated counter electrodes 72 are chosen to promote the reduction of oxygen to water with an accompanying supply of protons having passed through the outer sheath 77.

The outer sheath 77 is made of a cation exchange membrane to let protons produced at the core elongated electrodes 30 pass from its inner surface to its outer surface. The cation exchange membrane is for example made of polyfluorosulfonic acid polymers.

The operation of the fuel cell 70 of figure 10 will now be described.

When hydrogen and oxygen are fed respectively to the canal 34 of the elongated porous dry electrode line 20 and to the canal 78 of the elongated counter electrode line 22, hydrogen reacts at the core elongated electrodes 30 to form protons and electrons. The protons pass through the outer sheath 32 of the elongated porous dry electrode line 20 and through the outer sheath 77 of the elongated counter electrode line 22 at the contact points 24.

Oxygen reacts at the core counter electrodes 72 with protons and electrons to form water which is evacuated in the electrolyte 16.

The water produced in the container 14 is then progressively evacuated through the water removal outlet 76.

In a variant, the fuel cell is a hydroxide anion-based fuel cell. The catalysts applied on the core elongated electrodes 30 (for example made of catalyst coated carbon fibers) are chosen to promote hydrogen oxidation to water. The catalysts are for example chosen among transition metal compounds.

The hydroxide anions required for the electrode reaction are transported through the outer sheath 32 from the electrolyte 16.

The catalysts applied on the core elongated counter electrodes 72 are chosen to promote the reduction of oxygen to hydroxide anions. The catalysts are for example chosen among transition metal compounds.

The hydroxide anions produced at the electrode reaction are transported through the outer sheath 77.

The electrode assemblies 12 according to the invention are thus beneficially used in all types of electrochemical cells 10, either to carry out electrolysis to produce gases in an electrolyzer, or in a fuel cell 70, to provide current to a utility 74.

The electrochemical reactions occur in particular at the contact point 24 between the elongated porous dry electrode lines 20 and the elongated counter electrode lines 22.

The electrode assemblies 12 can thus be easily produced by traditional twisting, weaving, braiding or knitting processes, which allows them to be used in large scale installations in a safe and cost effective manner.

The problems of large-scale production of large surface area bipolar plates membranes or membrane electrode assemblies are thus overcome.

## Claims

1. An electrode assembly (12) for an electrochemical cell (10) configured to produce or consume gas via an electrochemical reaction, **characterized by**:
- at least one elongated porous dry electrode line (20) comprising at least one elongated core electrode (30) being electrically conductive, the at least one elongated core electrode (30) being configured to be electrically connected to an electrical power source (18) providing an electrical current or to a utility (74) consuming an electrical current, the at least one elongated porous dry electrode line (20) comprising an outer sheath (32) made at least partially of an ion permeable and gas impervious membrane applied on the at least one elongated core electrode (30), the at least one elongated core electrode (30) defining inside the outer sheath (32) at least a longitudinal gas circulation canal (34) emerging at least at one gas collection outlet or gas supply inlet of the at least one elongated porous dry electrode line (20) ;
- a gas collecting or supplying capacity (26; 73A) to collect gas from the at least one elongated porous dry electrode line (20) or to supply gas to the at least one elongated porous dry electrode line (20), the gas collection outlet or the gas supply inlet of the at least one elongated porous dry electrode line (20) being fluidly connected to the gas capacity (26, 73A).

2. The electrode assembly (12) according to claim 1, wherein the at least one elongated porous dry electrode line (20) comprises several elongated core electrodes (30) being in contact with the outer sheath (32) and being configured to be electrically connected to the electrical power source (18) providing an electrical current or to the utility (74) consuming an electrical current.

3. The electrode assembly (12) according to claim 2, wherein the several elongated core electrodes (30) are coated with an ionomer layer (33), in contact with the outer sheath (32).

4. The electrode assembly (12) according to any one of claims 2 to 3, wherein the at least one elongated porous dry electrode line (20) comprises at least an inner core (40) positioned within the several elongated core electrodes (30), the inner core (40) being in particular porous, and advantageously made of electrically insulating material.

5. The electrode assembly (12) according to any one of the preceding claims, wherein the ion permeable membrane is an ion solvating polymer or an ion exchange polymer.

6. The electrode assembly (12) according to any one of the preceding claims, wherein the ion permeable membrane is an extruded, dip-coated, electrophoretic and electrochemical deposited, potentially cured, in particular photo-cured or thermally-cured membrane.

7. The electrode assembly (12) according to any one of the preceding claims, comprising a plurality of elongated porous dry electrode lines (20), each elongated porous dry electrode line (20) of the plurality of elongated porous dry electrode lines (20) being connected to the same gas capacity (26) through the fluid connection of the at least one canal (34) of each elongated porous dry electrode line (20) of the plurality of elongated porous dry electrode lines (20) in parallel, to the capacity (26).

8. The electrode assembly (12) according to any one of the preceding claims, comprising at least one elongated counter electrode line (22), configured to be electrically connected to the electrical power source (18) providing an electrical current or to the utility (74) consuming an electrical current, the at least one elongated counter electrode line (22) having at least a contact point (24), in particular a contact line or surface, with the at least one electrode conductive line (20), in particular with the outer sheath (32) of the at least one electrode conductive line (20).

9. The electrode assembly (12) according to claim 8, wherein the at least one elongated counter electrode line (22) is made of at least one bare electrical core counter electrode.

10. The electrode assembly (12) according to claim 8, wherein the at least one elongated counter electrode line (22) is an elongated porous dry counter electrode line (22) comprising at least one elongated core counter electrode (72), the at least one elongated porous dry counter electrode line (22) comprising an additional outer sheath (77) made at least partially of an ion permeable membrane applied on the at least one elongated core counter electrode (72), the additional outer sheath (77) and the at least one elongated core counter electrode (72) defining inside the additional outer sheath (77) at least an additional longitudinal gas circulation canal (78) emerging at least at one gas collection outlet or gas supply inlet of the at least one elongated porous dry counter electrode line (22)

11. The electrode assembly (12) according to any one of claims 8 to 10, wherein the at least an elongated counter electrode line (22) has a plurality of contact points (24) with one elongated porous dry electrode line (20) or with a plurality of elongated porous dry electrode lines (20) along the length of the at least an elongated counter electrode line (22).

12. The electrode assembly (12) according to any one of claims 8 to 11, wherein the one elongated porous dry electrode line (20) is twisted with the at least one elongated counter electrode line (22) forming a bundle (42) defining a plurality of contact points (24), preferentially a contact line or a contact surface.

13. The electrode assembly (12) according to claim 12, comprising a plurality of bundles (42), each comprising at least one elongated porous dry electrode line (20) and at least one elongated counter electrode line (22) twisted together, the bundles (42) being assembled in parallel to the gas capacity (26), forming a brush.

14. The electrode assembly (12) according to any one of claims 8 to 13, comprising a plurality of elongated porous dry electrode lines (20), the plurality of elongated porous dry electrode lines (20) being interlaced, in particular weaved, braided or knitted, with a plurality or elongated counter electrode lines (22) to form at least a rug (50) or a multilayer three-dimensional structure having several layers (60) of elongated porous dry electrode lines (20).

15. The electrode assembly (12) according to claim 14, wherein each elongated porous dry electrode line (20) of the rug (50) or the multilayer three-dimensional structure has a plurality of successive contact points (24), in particular a contact line or a contact surface, with several successive elongated counter electrode lines (22) of the rug (50) or of the multilayer three-dimensional structure, each elongated counter electrode lines (22) of the rug (50) or of the multilayer three-dimensional structure having a plurality of successive contact points (24), in particular a contact line or a contact surface, with several successive elongated porous dry electrode lines (20) of the rug (50) or the multilayer three-dimensional structure.

16. Electrochemical cell (10), comprising at least one electrode assembly (12) according to any one of claims 1 to 15, and at least a container (14), containing an electrolyte solution in which the at least one elongated porous dry electrode line (20) is immersed.

17. An electrolyzer comprising at least one electrochemical cell (10) according to claim 16 and at least an electrical power source (18) connected to the at least one electrochemical cell (10) to provide an electrical current to the at least one elongated porous dry electrode line (20) of the at least one electrode assembly (12), and at least a gas processing installation, fluidly connected to the or each gas capacity (16) to process gas produced in the at least one elongated porous dry electrode line (20) and transported to the gas capacity (16) via the longitudinal gas circulation canal (34) of the at least one elongated porous dry electrode line (20).

18. A fuel cell (70), comprising at least one electrochemical cell (10) according to claim 16 and at least a gas source (73A), connected to the at least one elongated porous dry electrode line (20), to supply gas to the longitudinal gas circulation canal (34) of the at least one elongated porous dry electrode line (20).
